# EUROPEAN PATENT SPECIFICATION

(11) **EP 0 433 073 B1**
(45) Date of publication and mention of the grant of the patent: **19.02.1997**
(21) Application number: 90313612.5
(22) Date of filing: 13.12.1990
(51) Int. Cl.: G06F 17/21

(54) **Document formatting apparatus**
Apparat zum Formatieren eines Dokumentes
Appareil pour le formatage d'un document

(30) Priority: 14.12.1989 JP 322642/89
(43) Date of publication of application: 19.06.1991
(73) Proprietor: KABUSHIKI KAISHA TOSHIBA, Kawasaki-shi, Kanagawa-ken 210 (JP)
(72) Inventor: Iwai, Isamu, 1-1 Shibaura 1-chome, Minato-ku, Tokyo (JP); Yamaguchi, Koji, 1-1 Shibaura 1-chome, Minato-ku, Tokyo (JP); Fukui, Mika, 1-1 Shibaura 1-chome, Minato-ku, Tokyo (JP)
(74) Representative: BATCHELLOR, KIRK & CO.

(56) References cited:
- EP-A- 0 324 445
- COMMUNICATIONS OF THE ASSOCIATION FOR COMPUTING MACHINERY vol. 28, no. 9, September 1985, NEW YORK US pages 942 - 960 J. GUTKNECHT 'Concepts of the Text Editor Lara'
- COMPUTER vol. 21, no. 1, January 1988, LONG BEACH US pages 32 - 43 J. JOHNSON & R. J. BEACH 'Styles in Document Editing Systems'

## Description

The present invention relates to a document formatting apparatus for arranging a document according to a user's desired format.

Recently, Desk Top Publishing Systems (DTP) has been used in offices. The DTP allows many different page sizes, text frame sizes, character properties as layout functions and prints high quality documents.

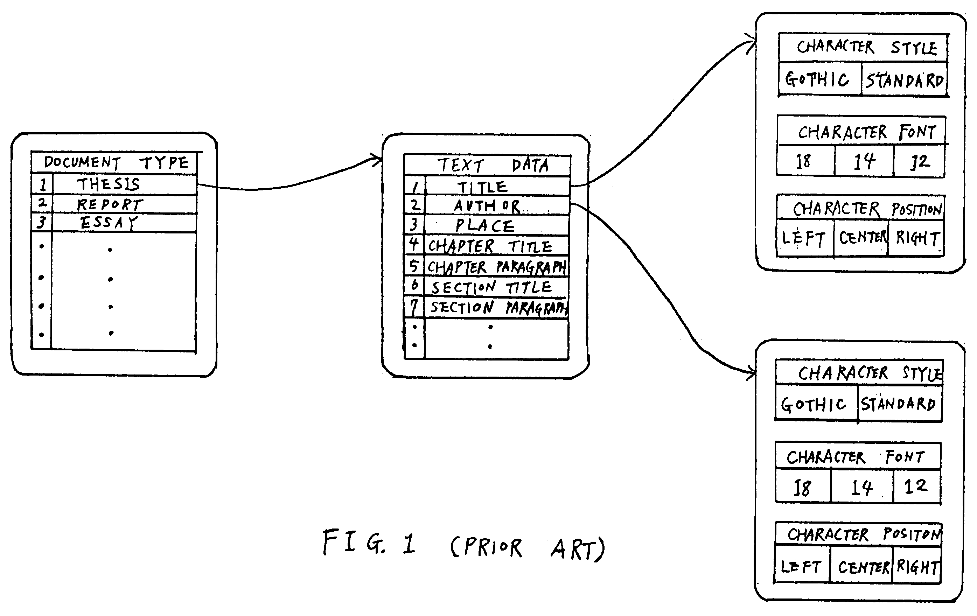

When using the DTP, at the beginning of creating document, the user must designate many kinds of layout function. For example, as shown in Figure 1, menu items are displayed in order and the user selects desired items one by one. In the left side of Figure 1, document type items are displayed first. When the user selects a thesis as his desired document type, text data items of a thesis are displayed as shown in the center of Figure 1.
The text data of a thesis are the title, author, place, chapter title, chapter paragraph, section title, section paragraph and so on. When the user selects the title, character property items for the title are displayed as shown in right upper side of Figure 1. These are character style, character font and character position, which are necessary for title to be created. The user then might select GOTHIC style as character style, 18 points as character font and centering as character position. Next, the text data items are displayed again as shown in center of Figure 1. When the user selects author, character property items for author are displayed as shown in right lower side of Figure 1. Then user selects each desired item in the same manner. In this way, the user designates all character properties of all text data for a thesis. However, because the user designates desired format by means of menu items only, he cannot view the formatted document image. Moreover if he is later displeased with the displayed formatted document, he must edit it. At this time, a small editor window is displayed by the side of the formatted document on display, and the user amends the formatted document by using the window. However this amended format is not saved for use in the next document creation. In short, the amendment made by using the editor window is not memorized. Therefore the user's desired final format is not applied to the next input document. In order to memorise this final format after amendment, menu items are displayed again and the user must designate items like he did in making the amendment. This second designation of menu item is troublesome for the user.

Communication of the ACM, vol. 28, no. 9, sept. 1985, New York, us, pages 942-960, J:GUTKNECHT " Concept of the Text Editor LARA" discloses a text editor in which a mouse is used to select menu cards connected with formatting actions, or, more precisely, the assignment of attribute values to selected text. The menu entries correspond to the attributes of the current selection level (i.e., the set of attributes, and hence the menu entries, is determined by the level of the selection. Having selected an attribute via the menu, a parameter value must be specified, one way of doing this is by typing a number or a font name. If just the RETURN key is hit, a corresponding default value is assigned. Here, however, Lara introduces a second, method of specifying parameter values: That is, if, instead of hitting a character key, the P-key is clicked at a text location within any document window on the display, the attribute value is taken from the text.

EP-A2-0 324 445 discloses apparatus for formatting a document which includes input means for allowing a user to enter document data representing a document to be formatted having a title: and
means for formatting the document;
means for identifying a subject field to which the document belongs by searching a key word characterizing the subject field;
and wherein the formatting means formats the document in one of a plurality of different types of format prescribed in accordance with the identified subject field.

EP-A2-0 328 900 discloses a method for editing a document capable of producing a satisfactorily well ordered layout automatically. The method includes the steps of (a) extracting characteristic quantities which characterizes different elements of the document; (b) deriving relationships among the different elements of the document in accordance with the characteristic quantities;
(c) determining layout of the different elements of the document in accordance with the relationships; and (d) processing document in accordance with the layout.

Accordingly, it is one object of the present invention to provide a document formatting apparatus which allows the user to easily understand the format which will be presented.

It is another object of the present invention to provide a document formatting apparatus which does not require the user to designate layout function by menu items.

It is another object of the present invention to provide a document formatting apparatus which memorises an amended format and uses it for the next input document.

Accordingly, the present invention provides a document formatting apparatus for automatically extracting layout structure information from a formatted document to edit an unformatted document, comprising:
input means for inputting the unformatted document which includes a plurality of text data;
text data analysis means for determining logical property of each text data of the unformatted document;
formatted document memory means for storing the formatted document which includes a plurality of text data with layout structure information and logical property of each text data, wherein the layout structure information includes page information, text frame information and character property of each text data, and wherein the page information, the text frame information, the logical property and the character property of each text data are located in predetermined order as data structure of the formatted document;
format information extract means for extracting the page information, the text frame information, the logical property and the character property of each text data from the formatted document in accordance with the predetermined order; and
format information application means for generating plural text frames included in page in accordance with the page information and the text frame information, for placing each text data of unformatted document in the text frame in accordance with the text frame information and the logical property of each text data of the unformatted document, and for editing each text data placed in the text frame in accordance with the character property corresponding to the logical property of each text data of the unformatted document.
One embdoment of the present invention will now be described by way of example with reference to the accompanying drawings in which:

Figure 1 shows an example of display transition by menu selection according to the prior art.

Figure 2 shows a schematic of a document formatting apparatus of the present invention.

Figure 3 shows a situation of format application according to the present invention.

Figure 4A and 4B show memorised data of formatted document and extended formatted data.

Figure 5 shows a flow chart of the process for extracting format from pre-formatted document according to the present invention.

Figure 6A, 6B and 6C show data structure of layout structure information and logical property information according to the present invention.

Figure 7A and 7B show input document and its logical property information.

Figure 8 shows formatted input document according to the present invention.

### DESCRIPTION OF THE PREFERRED EMBODIMENTS

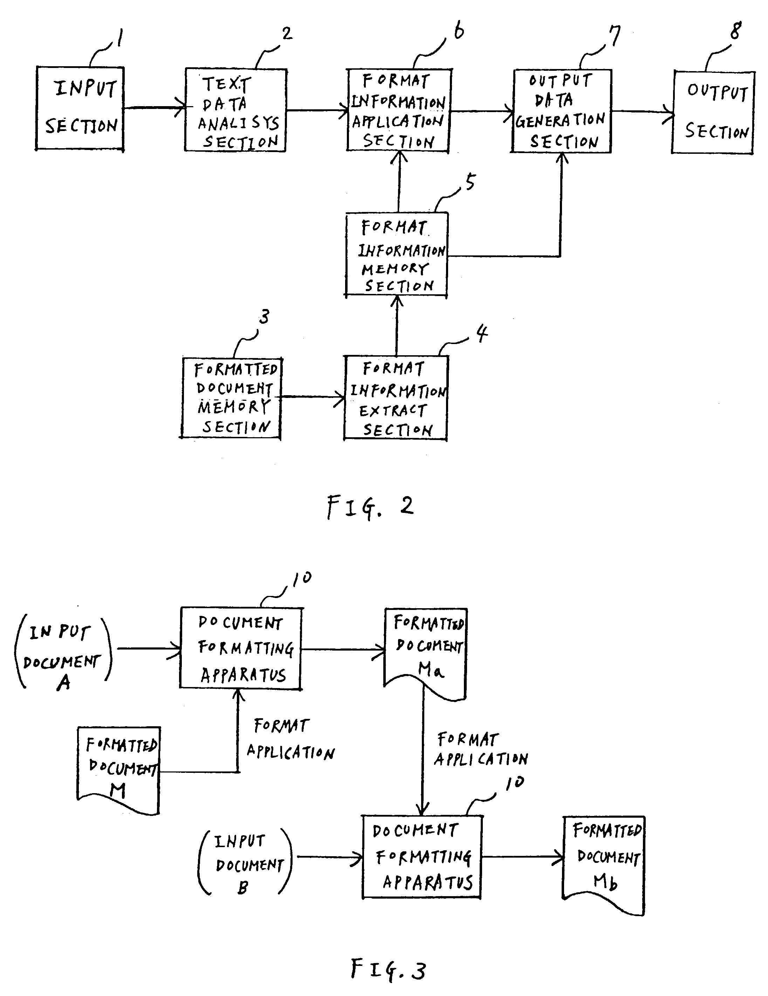

Figure 2 shows a schematic of a document formatting apparatus according to the present invention. This apparatus comprises on input section 1, text data analysis section 2, formatted document memory section 3, format information extract section 4, format information memory section 5, format information application section 6, output data generation section 7 and output section 8.

The input section 1 is means for entering document data consisting of character code and various operation command. For example, the input section 1 is keyboard or tablet.

The text data analysis section 2 is means for extracting a logical property of each text data input through the input section 1, and sends each text data and corresponding logical property information as output. (Text data is title, author name, place, chapter name, chapter paragraph, section name, section paragraph and so on. They compose the document.) in short, the text data analysis section 2 analysis each text data by using document structure analysis rules. This analysis technique is disclosed in USP 4813010.

The formatted document memory section 3 stores a pre-formatted document, which was generated by this apparatus and edited by by the last user. In other words, the stored document has format which was selected by the user the last time. This section 3 is, for example, a magnetic disk apparatus or an optical disk apparatus.

The format information extract section 4 extracts format information, which are layout structure and corresponding logical property, from the pre-formatted document stored in the document memory section 3. In short, various layout structure (page size, text frame size, character property) and logical property of each text data are extracted from pre-fomatted document. The extracted format information is stored in format information memory section 5.

The format information application section 6 compares the logical property of the input document with the logical property of the pre-formatted document. Then, for the text data of an input document whose logical property is matched with the logical property of the-formatted document, this section 6 sends the text data and character property, which corresponds to matched logical property of pre-formatted document, to the output data generation section 7.

The output data generation section 7 receives corresponding page size and text frame size from the format information memory section 5. Then the section 7 sets page area and text frame area inside the page area in its memory. And each text data, which are sent by the section 6, are located and edited according to the character property inside the text frame area.

The output section 8 is a CRT display apparatus for displaying the formatted document in proportion to the output data from the output data generation section 7.

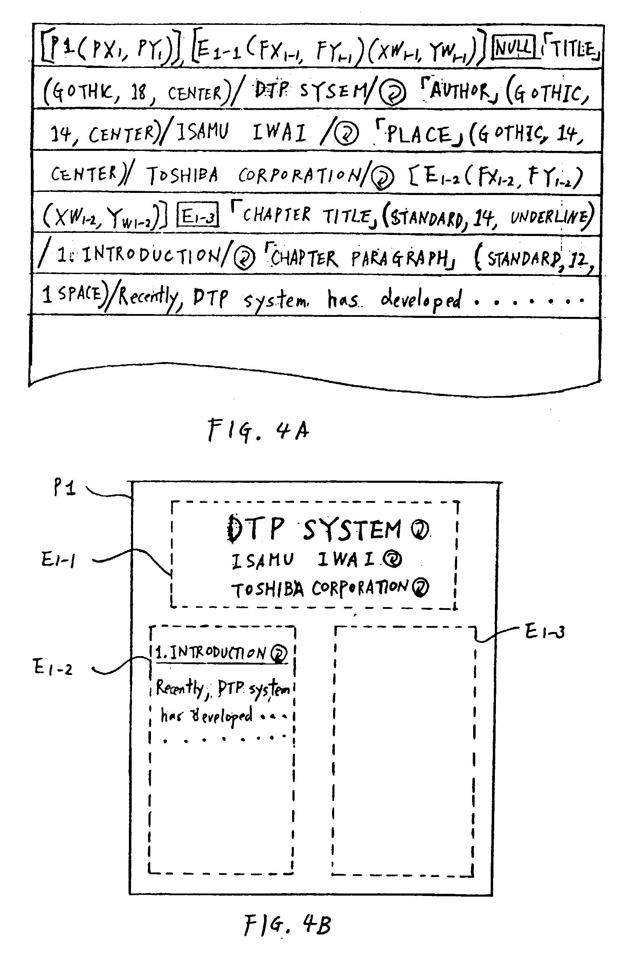

Figure 3 shows a situation of format application. By using Figure 3, the present invention will be explained in detail as follows. In Figure 3, document formatting apparatus 10 corresponds to all sections (from section 1 to section 8) in Figure 2. First, new document A enters the apparatus 10 through input section 1. As described above, text data (each sentence) of the document A is extracted by line feed code. And the logical property of each text data is determined according to the document structure analysis rule. On the other hand, a pre-formatted document is stored in the document memory section 3. If many types of formatted document are stored in the section 3, the user selects his desired type of formatted document through the input section 1. The selected formatted document M is sent to the format information extract section 4 in the apparatus 10. Figure 4A shows a memorized data structure of a formatted document.

Each symbol's meaning in Figure 4A is as follows.
1 [Pi(PXi, PYi)] [page number i (X width, Y width)]
2 [Ei-j(FXi-j, FYi-j)(XWi-j, YWi-j)] [text frame number j in page i (X starting point, Y starting point)(X width, Y width)]
3 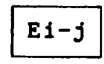 text contents in text frame Ei-(j-1) continues to text contents in next text frame Ei-j
4 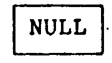 text contents in the text frame does not continue to text contents in next text frame
5 ┌.... ┘ logical property
6 (A, B, C ) (A is character style, B is character font, C is character position or attribute)
7 /....../ text contents
8 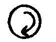 line feed code

According to the above-mentioned rules 1-8, the format information extract section 4 extracts layout structure and logical property included in formatted document. Figure 4B shows formatted document extended on display according to the memorized data in Figure 4A. In short, the format information extract section 4 is able to extract layout structure and logical property from the memorized data itself without extending it.

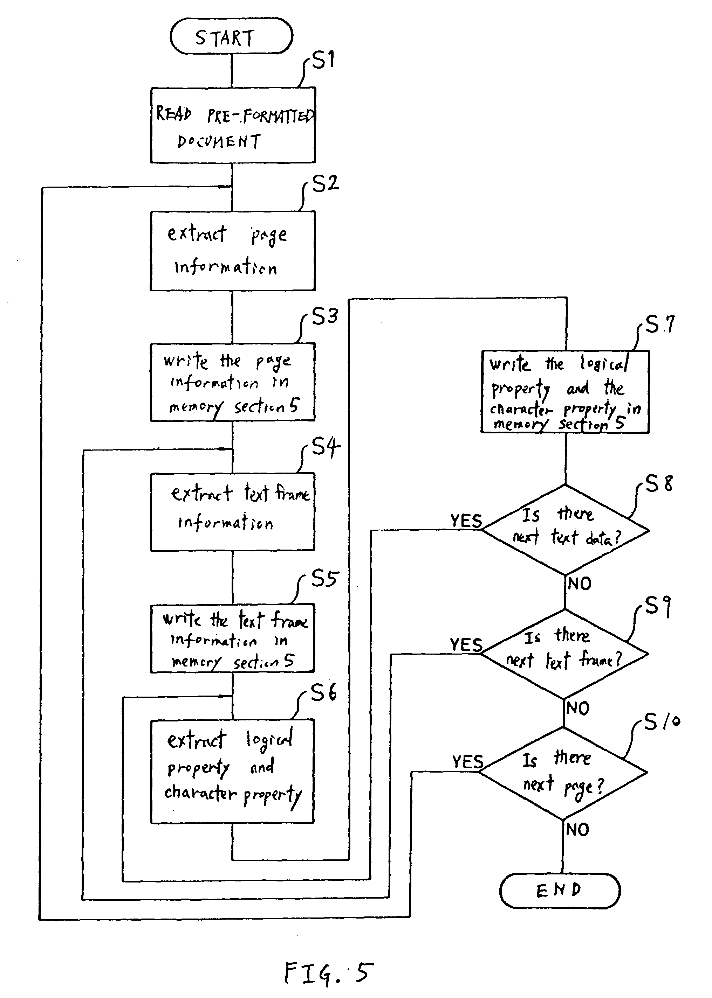

Figure 5 shows a flow chart of the extract process used by the section 4. First, against the received formatted document (Step S1), the section 4 extracts first page size by using above-mentioned extract rule 1 (Step S2). Then, extracted page size (PX1, PY1) with page number 1 are stored in the format information memory section 5 (Step S3). Secondly, against the page 1 extracted at step S2, the section 4 extracts first text frame size by using above-mentioned extract rule 2 (Step S4). And connection information (NULL) is extracted by using extract rules 3 and 4. Then extracted starting point (FX1-1, FY1-1), width (XW1-1, YW1-1) and connection information with text frame number E1-1 are stored in the format information memory section 5 (Step S5). Third, against the text frame E1-1 extracted at step S4, the section 4 finds first text data "DTP SYSTEM" by using extract rules 7 and 8. And the section 4 extracts logical property and character property by using extract rules 5 and 6 (Step S6). Then, extracted logical property (TITLE) and character property (GOTHIC, 18, CENTER) are stored in the format information memory section (Step 7). Next, against the text frame E1-1, the section 4 finds second text data "ISAMU IWAI" by using extract rules 7 and 8. And logical property (AUTHOR) and character property (GOTHIC, 14, CENTER) are extracted. This extract process (Step 6) is repeated for all text data in text frame E1-1 (Step 8). Next, against the page 1, second text frame size (FX1-2, FY1-2), (XW1-2, YW1-2) and connection information (E1-3) are extracted by using extract rule 2,3 and 4. And against the text frame E1-2, logical property and character property for each text data are extracted in the same way. This extract process (Step 4 - Step 6) is repeated for all text frame in the page 1 (Step 9). Last, against the received formatted document, second page size is extracted by using extract rule 1. (Second page is not disclosed in Figure 4A and 4B.) Against the second page, all text frames are extracted in order. Then, all logical property and character property in each text frame are extracted in order. This extract process (Step 2 - Step 6) is repeated for all pages in the formatted document.

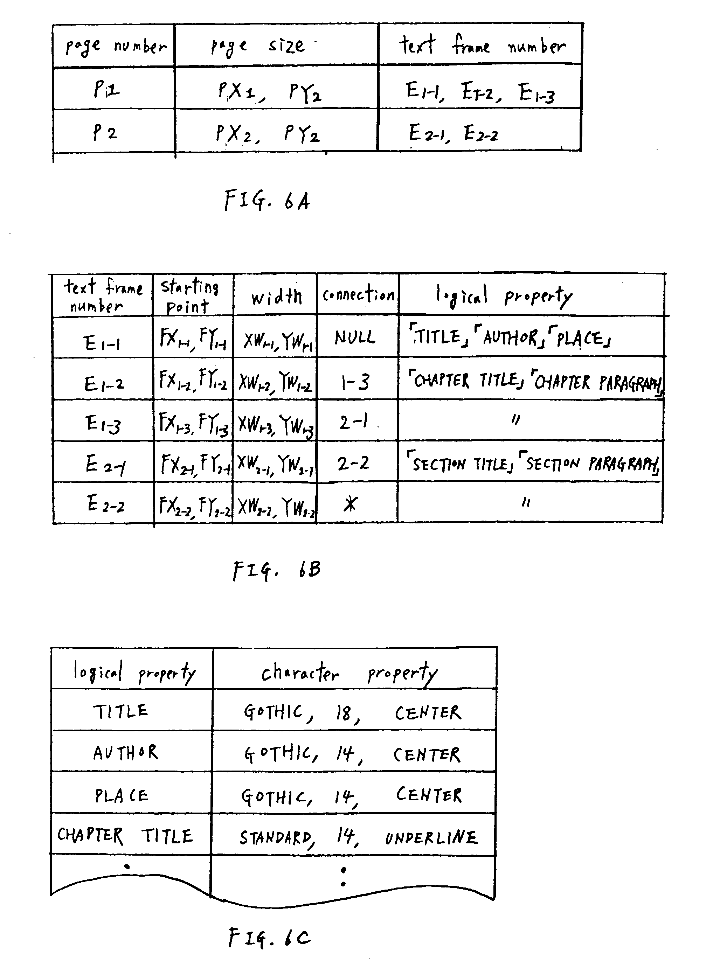

Figure 6A, 6B and 6C show data structure of layout structure and logical property stored in format information memory section 5. In Figure 6A, page size and text frame number corresponding to page number are disclosed. In Figure 6B, text frame size (starting point, width, connection) and logical property corresponding to text frame number are disclosed. At this place, text frames E1-2, E1-3, E2-1 and E2-2 are connected. In short, text data, whose logical property is chapter or section, are located in above-mentioned 4 text frames according to its contents volume. And connection mark (∗) corresponding to text frame E2-2 means the connection with next page. In other words, Figure 6A and 6B disclose two pages (P1, P2) only, but according to new input document volume, it happens that third page (P3) is formed and the input document is located in page P1, P2 and P3. In this case, the last text frame E2-2 in page P2 is connected with first text frame in page P3.

In Figure 6C, logical property and its character property (style, font, position or attribute) are disclosed. In Figure 6A and 6B, text frame number links page size with text frame size. In Figure 6B and 6c, logical property links text frame size with character property.

In Figure 3 again, format information memory section 5 in the apparatus 10 stores layout structure and logical property as shown in Figure 6A, 6B and 6C. On the other hand, text data analysis section 2 sends input text data and its logical property to the format information application section 6. Accordingly, the format information application section 6 compares input logical property with the logical property stored in format information memory section 5. As for input text data whose logical property coincides with stored logical property, input text data and character property corresponding to coincident stored logical property (as shown in Figure 6C) are sent to the output data generation section 7 in the apparatus 10. The output data generation section 7 receives corresponding page size and text frame size (as shown in Figure 6A and 6C) from the format information memory section 5. This section 7 forms page area and text frame area in the display memory (this is not illustrated). Then the input text data are located in the text frame area according to its logical property. And the input text data are arranged according to corresponding character property. When a user is displeased with the formatted document from the apparatus 10, he edits it in accordance with his desired format. In Figure 3, it is formatted document Ma which was edited by user. The formatted document Ma is stored instead of M in the formatted document memory section 3 in the apparatus 10. In short, the latest desired format for the user is stored in the section 3. Next, when new document data B is entered, the apparatus 10 applies the formatted document Ma (including the latest format for the user) for new document data B. Therefore, new document data B is arranged according to the latest desired format. However, if the user is displeased with new formatted document for the document data B, he edits it. In Figure 3, it is formatted document Mb. The formatted document Mb is stored instead of Ma in the memory section 3. In this way, the latest document format desired by the user is stored one after another.

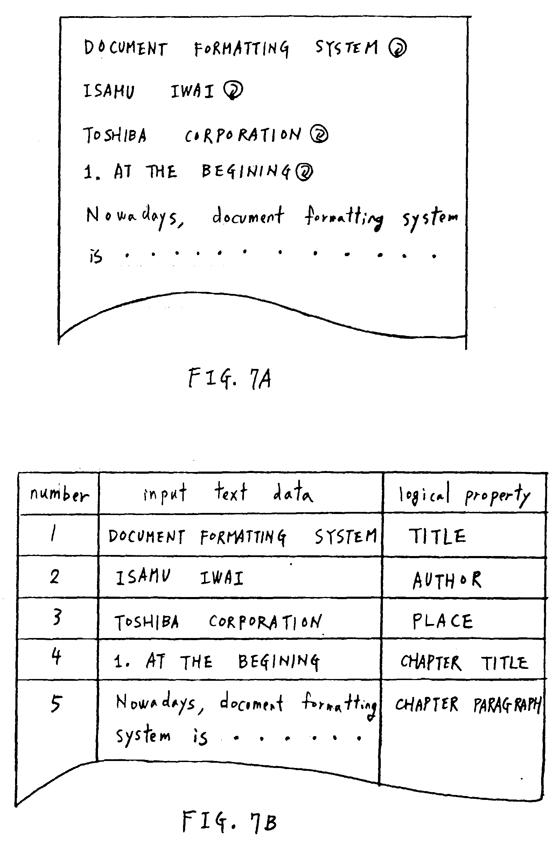

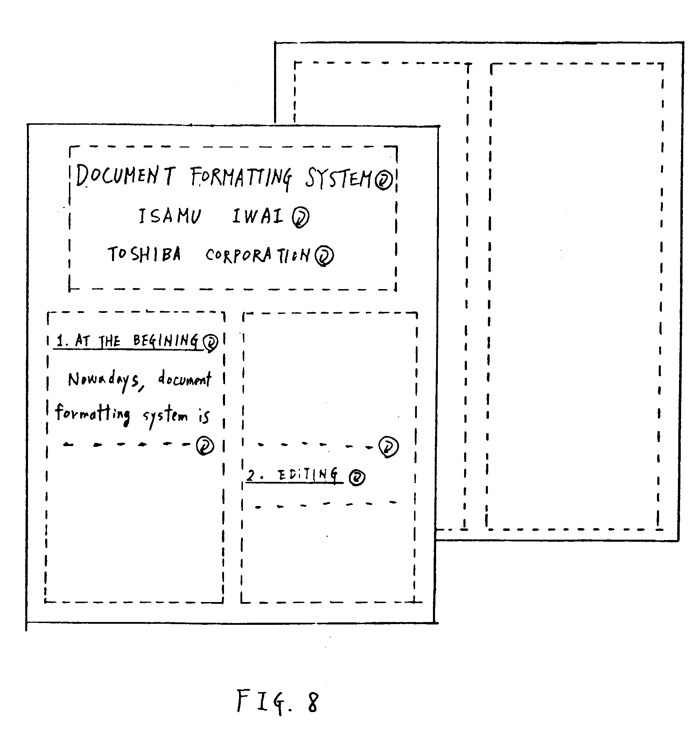

Next, by using Figures 7A, 7B and 8, the matching process between logical properties of the input document and logical properties of the stored document will be explained. Figure 7A shows an example of the input document, and Figure 7B shows the logical property of the input document. The format information application section 6 searches for the same logical property in the format information memory section 5 as the logical property of the input document. The Logical property of first text data in input document is "title". Therefore, the section 6 searches "title" against logical properties in the memory section 5 as shown in Figure 6C. In Figure 6C, first logical property "title" is matched and its character property (GOTHIC, 18 CENTER) is retrieved. Then, first text data "DOCUMENT FORMATTING SYSTEM" and character property (GOTHIC, 18 CENTER) are sent to the output data generation section 7. Next, the logical property of the second text data in input document is "author". Therefore, the section 6 searches "author" against logical properties in the memory section 5. In Figure 6C, second logical property "author" is matched and its character property (GOTHIC 14, CENTER) is retrieved. Then, second text data "ISAMU IWAI" and character property (GOTHIC, 14 CENTER) are sent to the output data generation section 7. In this way, each input text data and corresponding character property are sent to the section 7. Figure 8 shows formatted output of the input document data. According to the logical property in Figure 6C, the input document data is arranged by user's favorite format.

## Claims

1. A document formatting apparatus for automatically extracting layout structure information from a formatted document to edit an unformatted document, comprising:
input means (1) for inputting the unformatted document which includes a plurality of text data;
text data analysis means (2) for determining logical property of each text data of the unformatted document;
formatted document memory means (3) for storing the formatted document which includes a plurality of text data with layout structure information and logical property of each text data, wherein the layout structure information includes page information, text frame information and character property of each text data, and wherein the page information, the text frame information, the logical property and the character property of each text data are located in predetermined order as data structure of the formatted document;
format information extract means (4) for extracting the page information, the text frame information, the logical property and the character property of each text data from the formatted document in accordance with the predetermined order; and
format information application means (6) for generating plural text frames included in page in accordance with the page information and the text frame information, for placing each text data of unformatted document in the text frame in accordance with the text frame information and the logical property of each text data of the unformatted document, and for editing each text data placed in the text frame in accordance with the character property corresponding to the logical property of each text data of the unformatted document.

2. The document formatting apparatus according to claim 1, wherein said page information includes page size and text frame number whose text data is included in the page by unit of page number, and wherein said text frame information includes text frame size and logical property of text data which is included in the text frame by unit of text frame number.

3. The document formatting apparatus according to. claim 2, wherein said character property includes style, font and position of each text data of the formatted document by, unit of logical property.

4. The document formatting apparatus according to claim 11 wherein said logical property is title, author, place, chapter title, chapter paragraph, section title and section paragraph.

5. The document formatting apparatus according to claim 1, wherein said format information extract means (4) extracts the page information first, the text frame information included in the page second, the logical property and the character property of each text data included in the text frame third, from data structure of the formatted document, and repeats above extract processing in order by unit of page.

6. The document formatting apparatus according to claim 3, further comprising format information memory means (5) for storing the page information, the text frame information, the logical property and the character property wherein the text frame number of the page information corresponds to the text frame number of the text frame information, and wherein the logical property of the text frame information corresponds to the logical property of the character property.

7. The document formatting apparatus according to claim 6, wherein said format information application means (6) generates pages in accordance with the page size, and generates plural text frames in the page in accordance with the text frame size, in which the text frame number of the plural text frames corresponds to the text frame number of the page.

8. The document formatting apparatus according to claim 7, wherein said format information application means (6) places plural text data of the unformatted document in the text frame, in which the logical property of the text frame corresponds to the logical property of the plural text data, and edits characters of the plural text data in accordance with the character property, in which the logical property of the character property corresponds to the logical property of the plural text data.

9. The document formatting apparatus according to claim 1, wherein said formatted document was previously edited by said format information application means (6) and then was stored in said formatted document memory means (3).

## Patentansprüche

1. Dokumentformatiervorrichtung zum automatischen Gewinnen von Layoutstruktur-Information aus einem formatierten Dokument, um ein unformatiertes Dokument zu bearbeiten, mit:
Eingabemitteln (1) zum Eingeben des unformatierten Dokumentes, das eine Anzahl von Textdaten enthält;
Textdaten-Analysemitteln (2) zum Bestimmen der logischen Eigenschaften jeder Textdaten des unformatierten Dokumentes;
Formatinformations-Speichermitteln (3) zum Speichern des formatierten Dokumentes, die eine Anzahl von Textdaten mit Layoutstruktur-Information und den logischen Eigenschaften von jeden Textdaten hat, wobei die Layoutstruktur-Information Seiteninformation, Textrahmeninformation und die Zeicheneigenschaften von jeden Textdaten umfaßt und wobei die Seiteninformation, die Textrahmeninformation und die Zeicheneigenschaft von jeden Textdaten in festgelegter Reihenfolge als Datenstruktur des formatierten Dokumentes angeordnet sind;
Formatinformations-Gewinnungsmitteln (4) zum Gewinnen der Seiteninformation, der Textrahmeninformation und der Zeicheneigenschaft von jeden Textdaten aus dem formatierten Dokument gemäß der festgelegten Reihenfolge; und
Formatinformations-Anwendungsmitteln (6) zum Erzeugen mehrerer Textrahmen, die in der Seite enthalten sind, gemäß der Seiteninformation und der Textrahmeninformation zum Anordnen jeder Textdaten des unformatierten Dokumentes in den Textrahmen gemäß der Textrahmeninformation und der logischen Eigenschaft jeder Textdaten des unformatierten Dokumentes, und zum Bearbeiten jeder Textdaten, die in dem Textrahmen angeordnet sind, gemäß der Zeicheneigenschaft entsprechend der logischen Eigenschaften jeder Textdaten des unformatierten Dokumentes.

2. Dokumentformatiervorrichtung nach Anspruch 1, wobei die Seiteninformation Seitengröße und Textrahmennummer umfaßt, deren Textdaten in der Seite durch eine Seitennummer aufgenommen sind, und wobei die Textrahmeninformation die Textrahmengröße und die logische Eigenschaft der Textdaten umfaßt, die in dem Textrahmen in dem Element der Textrahmennummer enthalten sind.

3. Dokumentformatiervorrichtung nach Anspruch 2, wobei die Zeicheneigenschaft den Style, die Schriftart und die Position von jeden Textdaten des formatierten Dokumentes in dem Element der logischen Eigenschaften umfaßt.

4. Dokumentformatiervorrichtung nach Anspruch 1, wobei die logische Eigenschaft Titel, Autor, Ort, Kapitelüberschrift, Kapitelabsatz, Abschnittsüberschrift und Abschnittsabsatz sind.

5. Dokumentformatiervorrichtung nach Anspruch 1, wobei das Formatinformations-Gewinnungsmittel (4) zuerst die Seiteninformation, danach die Textrahmeninformation, die in der Seite enthalten sind, und als drittes die logische Eigenschaft und die Zeicheneigenschaft jeder Textdaten, die in dem Textrahmen enthalten sind, aus der Datenstruktur des formatierten Dokumentes gewinnt und die obige Gewinnungsverarbeitung der Reihe nach für die Seiten wiederholt.

6. Dokumentformatiervorrichtung nach Anspruch 3, weiterhin mit Formatinformations-Speichermitteln (5) zum Speichern der Seiteninformation, der Textrahmeninformation, der logischen Eigenschaft und der Zeicheneigenschaft, wobei die Textrahmennummer der Seiteninformationen der Textrahmennummer der Textrahmeninformationen entspricht und wobei die logische Eigenschaften der Textrahmeninformationen den logischen Eigenschaft der Zeicheneigenschaften entspricht.

7. Dokumentformatiervorrichtung nach Anspruch 6, wobei das Formatinformations-Anwendungsmittel (6) Seiten gemäß der Seitengröße und mehrere Textrahmen in der Seite gemäß der Textrahmengröße erzeugt, in denen die Textrahmennummer der mehreren Textrahmen mit der Textrahmennummer der Seite korrespondiert.

8. Dokumentformatiervorrichtung nach Anspruch 7, wobei das Formatinformations-Anwendungsmittel (6) mehrere Textdaten des unformatierten Dokumentes in dem Textrahmen anordnet, in denen die logische Eigenschaft des Textrahmens der logischen Eigenschaft der Mehrzahl von Textdaten entspricht, und Zeichen der Mehrzahl von Textdaten gemäß der Zeicheneigenschaft bearbeitet, in denen die logische Eigenschaft der Zeicheneigenschaft der logischen Eigenschaft der Mehrzahl von Textdaten entspricht.

9. Dokumentformatiervorrichtung nach Anspruch 1, wobei das formatierte Dokument vorher von dem Formatinformations-Anwendungsmittel (6) bearbeitet und dann in dem Formatinformations-Speichermittel (3) abgespeichert wurde.

## Revendications

1. Appareil de formatage d'un document pour extraire automatiquement les informations de la structure de présentation d'un document formaté afin d'éditer un document non formaté, comprenant :
des moyens d'entrée (1) pour entrer le document non formaté qui contient de multiples données de texte ;
des moyens d'analyse des données de texte (2) pour déterminer la propriété logique de chacune des données de texte du document non formaté ;
des moyens de mémoire du document formaté (3) pour mémoriser le document formaté qui contient de multiples données de texte avec des informations de la structure de présentation et une propriété logique des données de texte, dans lesquels les informations de la structure de présentation comprennent des informations de page, des informations de colonne de texte et une propriété des caractères de chaque donnée de texte, et dans lequel les informations de page, les informations de colonne de texte, la propriété logique et la propriété des caractères de chaque donnée de texte sont placées dans un ordre déterminé d'avance pour constituer la structure des données du document formaté ;
des moyens d'extraction des informations de format (4) pour extraire les informations de page, les informations de colonne de texte, la propriété logique et la propriété des caractères de chaque donnée de texte du document formaté selon l'ordre déterminé d'avance ; et
des moyens d'application des informations de format (6) pour créer de multiples colonnes de texte incluses dans une page selon les informations de page et les informations de colonne de texte, pour placer chaque donnée de texte du document non formaté dans la colonne de texte selon les informations de colonne de texte et la propriété logique de chaque donnée de texte du document non formaté, et pour éditer chaque donnée de texte placée dans la colonne de texte selon la propriété des caractères correspondant à la propriété logique de chaque donnée de texte du document non formaté.

2. Appareil de formatage d'un document selon la revendication 1, dans lequel les informations de page comprennent une dimension de page et un nombre de colonnes de texte dont les données de texte sont incluses dans chacune des pages, et dans lequel lesdites informations de colonne comprennent une dimension de colonne de texte et une propriété logique des données de texte qui sont incluses dans chacune des colonnes de texte.

3. Appareil de formatage d'un document selon la revendication 2, dans lequel la propriété des caractères comprend un style, une police et une position de chaque donnée de texte du document formaté dans chaque unité de propriété logique.

4. Appareil de formatage d'un document selon la revendication 1, dans lequel ladite propriété logique est un titre, un auteur, une position, un titre de chapitre, un paragraphe de chapitre, un titre de section et un paragraphe de section.

5. Appareil de formatage d'un document selon la revendication 1, dans lequel lesdits moyens d'extraction de format (4) extraient premièrement les informations de page, deuxièmement les informations de colonne de texte, troisièmement la propriété logique et la propriété des caractères de chaque donnée de texte incluse dans la colonne de texte de la structure des données du document formaté, et répètent la procédure d'extraction ci-dessus dans l'ordre pour chaque page.

6. appareil de formatage d'un document selon la revendication 3, comprenant encore des moyens de mémoire d'informations de format (5) pour mémoriser les informations de page, les informations de colonne de texte, la propriété logique et la propriété des caractères dans lequel le nombre de colonnes de texte des informations de page correspond au nombre des colonnes de texte des informations de colonne de texte, et dans lequel la propriété logique des informations de colonne de texte correspond à la propriété logique de la propriété des caractères.

7. Appareil de formatage d'un document selon la revendication 6, dans lequel lesdits moyens d'application des informations de format (6) créent des pages selon la dimension de page, et créent de multiples colonnes de texte dans la page selon la dimension des colonnes de texte, le nombre de colonnes de texte des multiples colonnes de texte correspondant au nombre des colonnes de texte de la page.

8. Appareil de formatage d'un document selon la revendication 7, dans lequel lesdits moyens d'application des informations de format (6) placent de multiples données de texte du document non formaté dans la colonne de texte, la propriété logique de la colonne de texte correspondant à la propriété logique des multiples données de texte et édite des caractères des multiples données de texte selon la propriété des caractères, la propriété logique de la propriété des caractères correspondant à la propriété logique des multiples données de texte.

9. Appareil de formatage d'un document selon la revendication 1, dans lequel ledit document formaté a été édité au préalable par lesdits moyens d'application des informations de format (6) et puis a été mémorisé dans lesdits moyens de mémoire de document formaté (3).
